# EUROPEAN PATENT APPLICATION

(11) **EP 3 267 103 A1**
(43) Date of publication of application: **10.01.2018**
(21) Application number: 17180066.7
(22) Date of filing: 06.07.2017
(51) Int. Cl.: F23C 99/00, F01N 3/26, F23D 14/32, F23L 7/00

(54) **FLAMELESS THERMAL OXIDIZER AND CORRESPONDING METHOD**

(30) Priority: 07.07.2016 US 201662359272 P; 29.06.2017 US 201715636853
(71) Applicant: Linde Aktiengesellschaft, 80331 München (DE)
(72) Inventor: IRRGANG, Gene H., Horsham, PA 19044 (US); PREDATSCH, Eric, Conshohocken, PA 19428 (US); KORN, Steven, Northampton, PA 18067 (US); RICHARDSON, Andrew P., Clinton, NJ 08809 (US)
(74) Representative: Hofmann, Andreas

(57) **Abstract**

In order to overcome the limitations and problems that earlier apparatus and earlier methods have experienced, a flameless thermal oxidizer (110; 210; 310; 410) is proposed, said oxidizer (110; 210; 310; 410) comprising:
- a container (112; 212; 312; 412) in which a ceramic matrix is contained; and
- a diptube (120; 220; 320; 420) having a passageway (130; 230; 330; 430) extending therethrough,
the diptube (120; 220; 320; 420) inserted or positioned in the ceramic matrix and in which a plurality of gaseous streams are present for combustion at the ceramic matrix, the plurality of gaseous streams including a vent stream and an oxygen stream.

A related method of operating a flameless thermal oxidizer (110; 210; 310; 410) is also proposed.

## Description

### Technical field of the present invention

The present invention relates to a flameless thermal oxidizer (FTO) and to a corresponding method.

### Technological background of the present invention

In order to reach a desired operating temperature in an FTO, the waste to be reacted in same must have a minimum calorific value. When a low energy content waste stream has to be completely combusted, but such stream includes therein a product of combustion temperature which is too low, a typical solution is to enrich the waste stream with a more valuable, higher calorific value gas as the fuel.

This process requires an increase in air for combustion and as such, additional fuel is required as well as an increase in both the total combustion product volume and the size of the reaction chamber, all of which reduces cost effectiveness.

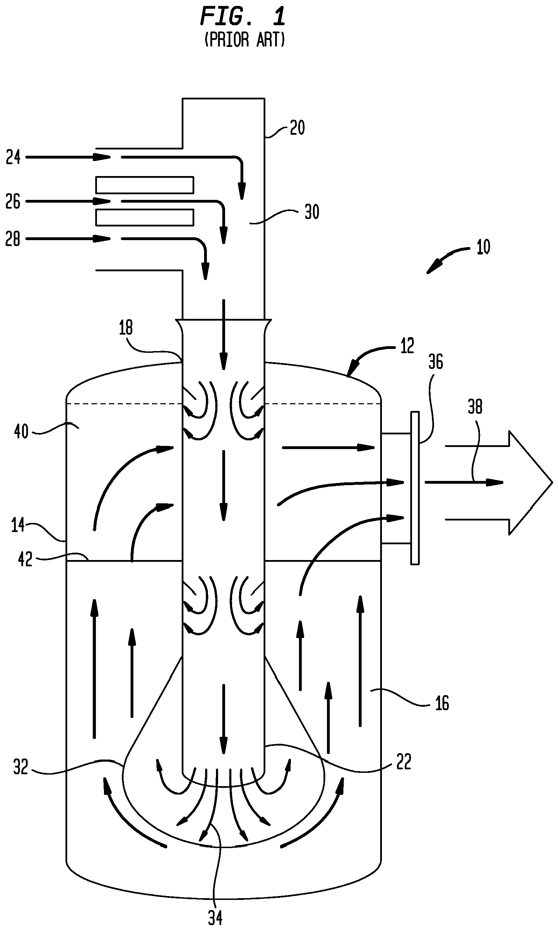

In a conventional FTO shown generally at 10 in FIG. 1, air and a waste stream (a vent stream from another process) which may include organic and other particular material is introduced via a diptube into a preheated porous matrix.

As the air and waste stream expands through a matrix it absorbs heat from the ceramic until the stream reaches its auto-ignition temperature, at which point it starts to react, liberate heat and deliver heat back to the ceramic matrix. Such delivered heat is then transferred back through the ceramic matrix, by a combination of conduction, convection and radiation, serving to preheat a fresh waste stream and air entering the matrix via the diptube.

In such a process, a self-sustaining oxidation process is achieved, and high peak flame temperatures observed in conventional combustion systems are avoided by the transfer of heat rapidly to the ceramic matrix.

In particular, the FTO includes a container 12 or vessel with internal space 14 in which a hot ceramic matrix 16 is disposed. A top of the container 12 is provided with an opening 18 through which a diptube 20 or inlet diptube is inserted.

A lower end 22 of the diptube 20 opens into the ceramic matrix 16. An upper end of the diptube 20 above the opening 18 and external to the container 12 is provided with a plurality of inlets 24, 26, 28.

The inlets 24, 26, 28 are connected to and in communication with an internal passage 30 extending through the diptube 20 to the lower end 22:
- The inlet 24 is the vent or waste inlet for providing a waste stream from an upstream process (not shown) into the internal passage 30 of the diptube 20.
- The inlet 26 is the air inlet introducing an air stream into the internal passage 30 of the diptube 20.
- The inlet 28 is the fuel inlet for providing a fuel stream to the internal passage 30 of the diptube 20.

All of the streams provided by the inlets 24, 26, 28 are mixed in the internal passage 30 and are discharged from the lower end 22 of the diptube 20 into the hot ceramic matrix 16 which provides an oxidation zone 32 extending from the lower end 22 outward and upward along the diptube 20. The oxidation zone 32 tapers to a reduced diameter and dissipates as it heats the ceramic matrix 16 in the container 12, as shown by the arrows 34.

The container 12 is also provided with an outlet 36 or exhaust in which clean gas 38 is discharged from the ullage 40 in the container 12 above an upper surface 42 of the ceramic matrix 16. That is, the outlet 36 is in fluid communication with the ullage 40 above the surface 42 of the ceramic matrix 16, such that the latter will not be exhausted through the outlet 36 with the clean gas 38.

In effect, the vent or waste stream being introduced at the inlet 24 may contain organic and/or particulate matter which is combusted and/or filtered in the hot ceramic matrix 16 and thereafter exhausted from the ullage 40 above the matrix 16 and through the outlet 36 to be discharged as the clean gas stream 38.

The gaseous waste stream-air mixture 24, 26 has to be sufficiently reactive and have sufficient energy content to create products of combustion able to effectively heat the ceramic matrix and to preheat the incoming waste-air mixture. This is often accomplished by an adiabatic combustion temperature which can be readily calculated on a thermodynamic basis knowing the composition and temperature of the waste and air streams.

If the waste stream-air mixture is not sufficiently reactive and the products of combustion cannot be raised to the required temperature using the inherent enthalpy of combustion of the waste stream, then supplemental fuel may be added. However, the added fuel increases operating costs, and also increases emissions and a requirement for a larger reaction vessel, due to the increased volume of combustion products.

### Disclosure of the present invention: object, solution, advantages

Starting from the disadvantages and shortcomings as described above as well as taking the prior art as discussed into account, an object of the present invention is to overcome the limitations and problems that earlier apparatus and earlier methods have experienced.

This object is accomplished by an apparatus comprising the features of claim 1 as well as by a method comprising the features of claim 8. Advantageous embodiments, expedient improvements and other optional features of the present invention are set forth herein and disclosed in the respective dependent claims.

There is therefore provided a flameless thermal oxidizer (FTO) as well as a related method of operating a flameless thermal oxidizer.

More particularly, the size of a flameless thermal oxidizer (FTO) is reduced by oxygen (O₂) enhancement.

Even more particularly, there is therefore provided herein to replace at least a portion of the air used in the flameless thermal oxidizer (FTO) to combust the waste stream with an oxygen rich stream, such that the combustion product temperature is increased without the need to use additional fuel.

The present embodiments therefore reduce the volume of combustion products which results in either a smaller volume flameless thermal oxidizer (FTO) being used or a higher throughput through the existing flameless thermal oxidizers (FTO) while avoiding the need for additional fuel.

A flameless thermal oxidizer (FTO) provided herein includes a container in which a ceramic matrix is contained and a diptube having a passageway extending therethrough, the diptube inserted or positioned in the ceramic matrix and in which a plurality of gaseous streams are present for combustion at the ceramic matrix, the plurality of gaseous streams including at least a vent stream and an oxygen stream.

According to an advantageous embodiment of the present invention, the flameless thermal oxidizer may further comprise
- a first inlet connected to and in communication with the passageway for introducing the vent stream into the passageway, and
- a second inlet connected to and in communication with the passageway for introducing the oxygen stream into the passageway.

In an expedient embodiment of the present invention, the first inlet may be separate from the second inlet.

According to a favoured embodiment of the present invention, the second inlet may comprise a pipe sized and shaped to extend into and through a length of the passageway.

In a preferred embodiment of the present invention, a distal end of the pipe may have an outlet upstream of an opening at a lower end of the diptube.

According to an advantageous embodiment of the present invention, another pipe may be connected to and in communication with the passageway, the another pipe comprising an air stream therein for mixing with the oxygen stream in the another pipe for providing an oxygen-airstream mixture to be provided to the passageway.

In an expedient embodiment of the present invention, another pipe may be connected to and in communication with the passageway, the another pipe comprising an air stream, a fuel stream, the vent stream, and the oxygen stream for providing a mixture to be provided to the passageway.

A method of operating a flameless thermal oxidizer includes introducing a plurality of gaseous streams into a heated ceramic matrix contained within the flameless thermal oxidizer, the plurality of gaseous streams including at least a vent stream and an oxygen stream.

According to a favoured embodiment of the present invention, the vent stream and the oxygen stream may be introduced separately.

In a preferred embodiment of the present invention, mixing the vent stream and the oxygen stream may be mixed after the introducing.

According to an advantageous embodiment of the present invention, the plurality of gaseous streams may further comprise an air stream and a fuel stream.

In an expedient embodiment of the present invention, the vent, oxygen, air and the fuel streams may be introduced separately.

According to a favoured embodiment of the present invention, the separately provided vent, oxygen, air and fuel streams may be mixed for providing a mixed stream, and the mixed stream may be introduced into the heated ceramic matrix.

In a preferred embodiment of the present invention, the air stream and the oxygen stream may be mixed for providing an air-oxygen mixture upstream of the vent and fuel streams, and the air-oxygen mixture may be introduced into the vent and fuel streams.

According to an advantageous embodiment of the present invention, the oxygen stream may be introduced into the vent stream proximate the ceramic matrix.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1 as well as on claim 8; further improvements, features and advantages of the present invention are explained below in more detail with reference to the particular and preferred embodiments by way of non-limiting example and to the appended drawing figures taken in conjunction with the following description of exemplary embodiments, of which:
- FIG. 1: shows a side view in cross-section of a known flameless thermal oxidizer (FTO);
- FIG. 2: shows a side view in cross-section of a first embodiment of a flameless thermal oxidizer (FTO) according to the present invention, said embodiment working according to the method of the present invention;
- FIG. 3: shows a side view in cross-section of another embodiment of a flameless thermal oxidizer (FTO) according to the present invention, said embodiment working according to the method of the present invention;
- FIG. 4: shows a side view in cross-section of still another embodiment of a flameless thermal oxidizer (FTO) according to the present invention, said embodiment working according to the method of the present invention; and
- FIG. 5: shows a side view in cross-section of still another embodiment of a flameless thermal oxidizer (FTO) according to the present invention, said embodiment working according to the method of the present invention.

The accompanying drawings are included to provide a further understanding of the apparatus and method(s) provided herein and are incorporated in and constitute a part of this specification. The drawings illustrate various embodiments of the apparatus and method(s) provided herein and, together with the description, serve to explain the principles described herein but are not intended to limit the specification or any of the claims.

### Detailed description of the drawings; best way of embodying the present invention

Before explaining the present inventive embodiments in detail, it is to be understood that the embodiments are not limited in its respective application to the details of construction and arrangement of parts illustrated in the accompanying drawings, since the present invention is capable of other embodiments and of being practiced or carried out in various ways. Also, it is to be understood that the phraseology or terminology employed herein is for the purpose of description and not of limitation.

In the following description, terms such a horizontal, upright, vertical, above, below, beneath and the like, are used solely for the purpose of clarity illustrating the present invention and should not be taken as words of limitation. The drawings are for the purpose of illustrating the present invention and are not intended to be to scale.

The present embodiments include a system where an increased oxygen concentration (greater than that found in air) is used to provide the desired combustion temperature without using additional fuel and air and, in fact, reduces the overall volume of the products of combustion. As such, either an increase in capacity for the same volume reactor or a smaller reactor is needed for the same throughput. This will result in capital cost savings.

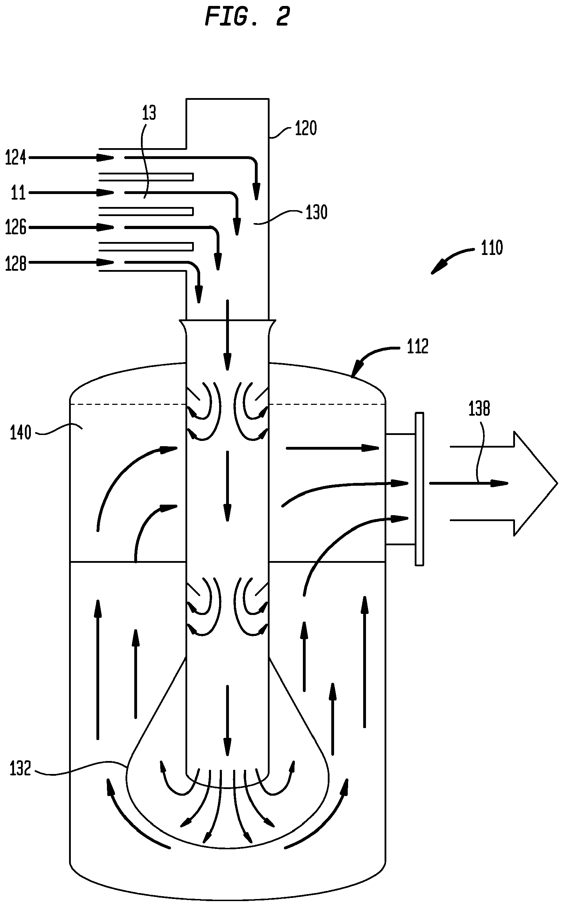

Referring to FIG. 2 to FIG. 5, four embodiments of an FTO are shown according to the present invention. Four exemplary embodiments of an FTO constructed in accordance with the present invention are illustrated in FIG. 2 to FIG. 5, respectively. Elements illustrated in FIG. 2 to FIG. 5 which correspond to the elements described above with respect to FIG. 1 have been designated by corresponding reference signs increased by 100, 200, 300 and 400 compared to FIG. 1, respectively.

In order to avoid unnecessary repetitions, the explanations above and below relate to all four of the exemplary embodiments of the present invention illustrated in FIG. 2 to FIG. 5 with respect to the configurations, features and advantages of the present invention, unless otherwise stated. The embodiments of FIG. 2 to FIG. 5 are designed for use in the same manner as the embodiment of FIG. 1 unless otherwise stated:
Referring to the embodiment shown at FIG. 2, a pure oxygen (O₂) stream 11 is introduced into a separate inlet 13 which is connected to and in communication with an internal passage 130 of an inlet diptube or diptube 120. The oxygen (O₂) stream 11 mixes in the internal passage 130 with inlet streams, namely with a vent or waste stream, with an air stream, and with a fuel stream.

The flameless thermal oxidizer (FTO) 110 according to the first embodiment shown in FIG. 2 includes a container 112 or vessel with an internal space in which a hot ceramic matrix is disposed. A top of the container 112 is provided with an opening through which the diptube 120 is inserted.

A lower end of the diptube 120 opens into the ceramic matrix. An upper end of the diptube 120 above the opening and external to the container 112 is provided with the plurality of inlets 124, 13, 126, 128.

The inlets 124, 13, 126, 128 are connected to and in communication with an internal passage 130 extending through the diptube 120 to the lower end:
- The inlet 124 is the vent or waste inlet for providing the vent or waste stream from an upstream process (not shown) into the internal passage 130 of the diptube 120.
- The inlet 13 is the oxygen inlet introducing the oxygen stream 11 into the internal passage 130 of the diptube 120.
- The inlet 126 is the air inlet introducing the air stream into the internal passage 130 of the diptube 120.
- The inlet 128 is the fuel inlet for providing the fuel stream to the internal passage 130 of the diptube 120.

All of the streams provided by the inlets 124, 13, 126, 128 are mixed in the internal passage 130 and are discharged from the lower end of the diptube 120 into the hot ceramic matrix which provides an oxidation zone 132 extending from the lower end outward and upward along the diptube 120. The oxidation zone 132 tapers to a reduced diameter and dissipates as it heats the ceramic matrix in the container 112, as shown by the arrows in FIG. 2.

The container 112 is also provided with an outlet or exhaust in which clean gas 138 is discharged from the ullage 140 in the container 112 above an upper surface of the ceramic matrix. That is, the outlet is in fluid communication with the ullage 140 above the surface of the ceramic matrix, such that the latter will not be exhausted through the outlet with the clean gas 138.

In effect, the vent or waste stream being introduced at the inlet may contain organic and/or particulate matter which is combusted and/or filtered in the hot ceramic matrix and thereafter exhausted from the ullage 140 above the matrix and through the outlet to be discharged as the clean gas stream 138.

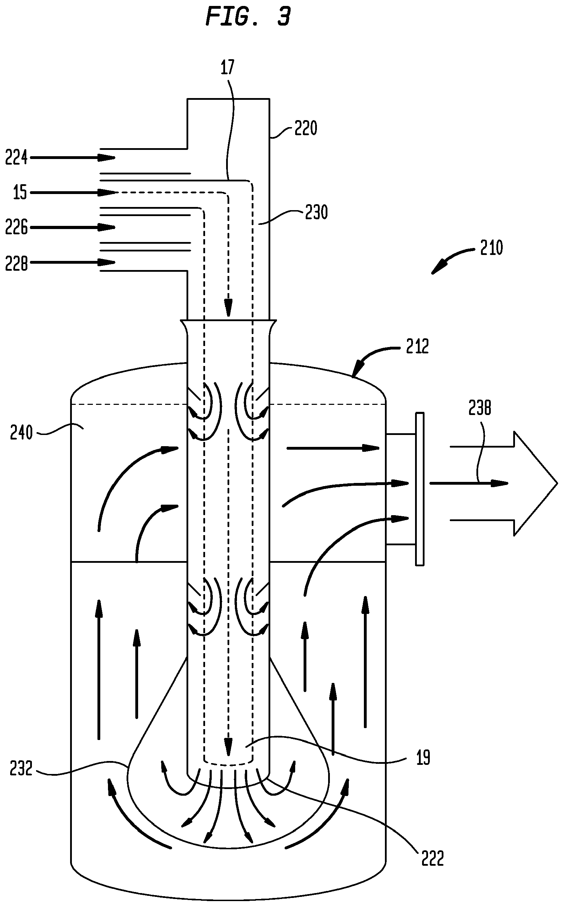

Three other exemplary embodiments of an FTO constructed in accordance with the present invention are illustrated in FIG. 3 to FIG. 5, respectively. Elements illustrated in FIG. 3 to Fig. 5 which correspond to the elements described above with respect to FIG. 2 have been designated by corresponding reference signs increased by 100, 200 and 300 compared to FIG. 2, respectively. The embodiments of FIG. 3 to FIG. 5 are designed for use in the same manner as the embodiment of FIG. 2 unless otherwise stated.

Referring to FIG. 3, this second embodiment of a flameless thermal oxidizer (FTO) 210 is provided with a pure oxygen (O₂) stream 15 introduced through an inlet pipe 17 which is sized and shaped for extending into and through a substantial length of the internal passage 230 of the diptube 220.

As shown in FIG. 3, a lower end 19 of the inlet pipe 17 opens at an outlet prior to or upstream of an opening at the lower end 222 of the diptube 220. This provides for mixing of the oxygen (O₂) stream 15 with the inlet streams 224, 226, 228 prior to being exhausted into the oxidation zone 232.

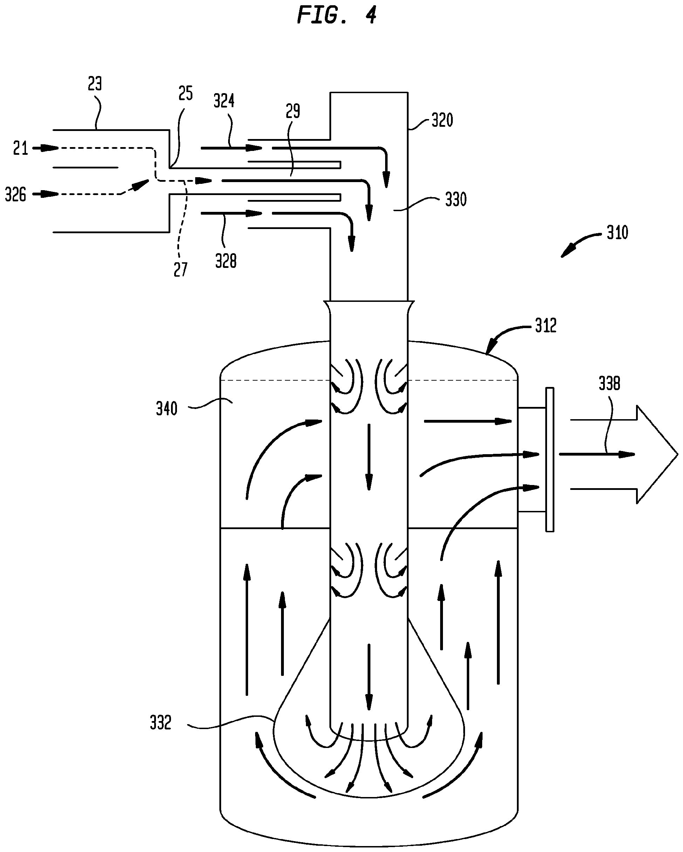

In the third embodiment of a flameless thermal oxidizer (FTO) 310 shown in FIG. 4, a pure oxygen (O₂) stream 21 and the inlet stream 326 for the air are combined in a pipe 23 which has an outlet 25 for the combined oxygen-airstream 27 to be introduced at an inlet 29 in gaseous communication with the internal passage 330 of the diptube 320. The oxygen-air stream 27 mixes with the vent stream 324 and the fuel stream 328 in the internal passage 330.

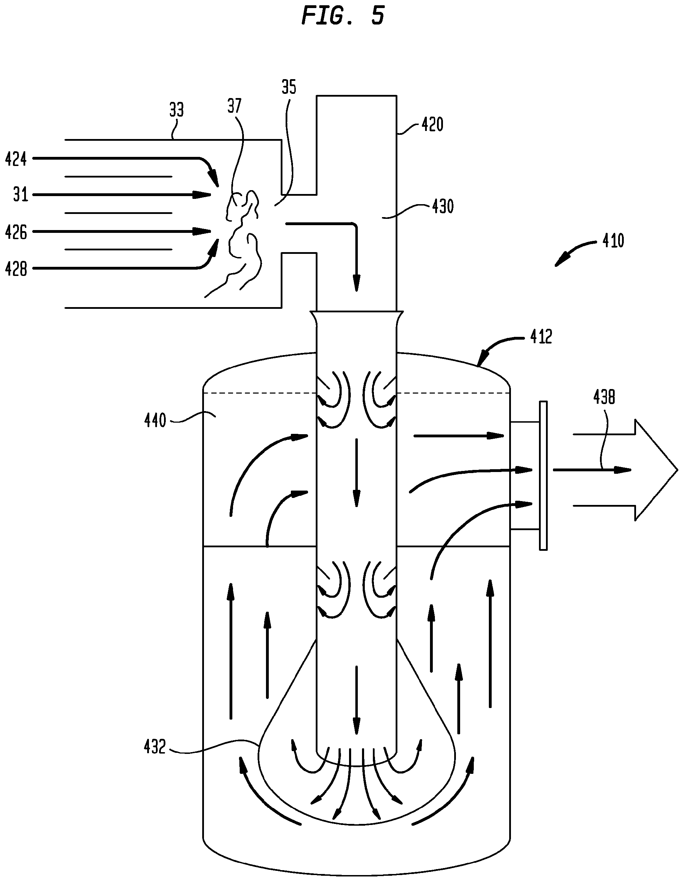

In the fourth embodiment of a flameless thermal oxidizer (FTO) 410 shown in FIG. 5, a pure oxygen (O₂) stream 31 is mixed with the inlet streams 424, 426, 428 in a pipe 33 having an outlet 35 connected to and in communication with the internal passage 430 of the diptube 420.

The pipe 33 is external to the diptube 420, wherein a construction of the pipe permits the pure oxygen (O₂) stream 31 and the inlet streams 424, 426, 428 to be mixed together as shown generally at 37 whereupon said mixture 37 is introduced into the internal passage 430.

The oxygen (O₂) concentration in the streams 11, 15, 21, 31 can be increased by using substantially pure oxygen introduced into air, using an oxygen rich stream mixed with air or, if in sufficient quantity, using only an oxygen rich stream.

The oxygen rich streams of the embodiments in FIG. 2 to FIG. 5 may also be a by-product stream or vent stream from for example a nitrogen generator.

As discussed above, the oxygen enriched stream may be mixed with the air prior to the diptube, mixed with the air-waste mixture prior to the diptube, or kept separate from the other streams until the discharge opening at the lower end of the diptube.

The foregoing embodiments of FIG. 2 to FIG. 5 provide for:
- a reduction in reactor size for given capacity/throughput and therefore, capital cost savings occur;
- an increase in reactor throughput and therefore, increased productivity;
- a reduction in supplemental fuel and therefore, reduced operating costs; and
- allowance of processing of low C[alorific]V[alues] or energy values or heating values / of low heat wastes or BTU wastes that would not normally be used in a flameless thermal oxidizer (FTO)and therefore, increased flexibility.

The present embodiments may be used for example to process vent streams from processes such as for example a nitrogen generator.

It will be understood that the embodiments described herein are merely exemplary, and that one skilled in the art may make variations and modifications without departing from the spirit and scope of the present invention. All such variations and modifications are intended to be included within the scope of the present invention as described and claimed herein. Further, all embodiments disclosed are not necessarily in the alternative, as various embodiments of the present invention may be combined to provide the desired result.

### List of reference signs

- 10: flameless thermal oxidizer (FTO) (prior art; cf. FIG. 1)
- 12: container or vessel
- 14: internal space
- 16: ceramic matrix, in particular hot ceramic matrix
- 18: opening
- 20: diptube, in particular inlet diptube
- 22: lower end of diptube 20
- 24: first inlet, in particular vent inlet or waste inlet
- 26: air inlet
- 28: fuel inlet
- 30: passageway or internal passage of diptube 20
- 32: oxidation zone
- 34: heating of ceramic matrix 16
- 36: outlet or exhaust
- 38: clean gas, in particular clean gas stream
- 40: ullage
- 42: upper surface of ceramic matrix 16
- 110: flameless thermal oxidizer (FTO) (first embodiment; cf. FIG. 2)
- 11: oxygen (O₂), in particular oxygen (O₂) inlet stream
- 13: second inlet, in particular for oxygen 11
- 112: container or vessel
- 120: diptube, in particular inlet diptube
- 124: first inlet, in particular vent inlet or waste inlet
- 126: air inlet
- 128: fuel inlet
- 130: passageway or internal passage of diptube 120
- 132: oxidation zone
- 138: clean gas, in particular clean gas stream
- 140: ullage
- 210: flameless thermal oxidizer (FTO) (second embodiment; cf. FIG. 3)
- 15: oxygen (O₂), in particular oxygen (O₂) inlet stream
- 17: second inlet, in particular inlet pipe for oxygen 15
- 19: lower end
- 212: container or vessel
- 220: diptube, in particular inlet diptube
- 222: lower end of diptube 220
- 224: first inlet, in particular vent inlet or waste inlet
- 226: air inlet
- 228: fuel inlet
- 230: passageway or internal passage of diptube 220
- 232: oxidation zone
- 238: clean gas, in particular clean gas stream
- 240: ullage
- 310: flameless thermal oxidizer (FTO) (third embodiment; cf. FIG. 4)
- 21: oxygen (O₂), in particular oxygen (O₂) inlet stream
- 23: pipe for oxygen-air stream mixture 27
- 25: outlet of pipe 23
- 27: oxygen-air stream mixture
- 29: inlet
- 312: container or vessel
- 320: diptube, in particular inlet diptube
- 324: first inlet, in particular vent inlet or waste inlet
- 326: air inlet
- 328: fuel inlet
- 330: passageway or internal passage of diptube 320
- 332: oxidation zone
- 338: clean gas, in particular clean gas stream
- 340: ullage
- 410: flameless thermal oxidizer (FTO) (fourth embodiment; cf. FIG. 5)
- 31: oxygen (O₂), in particular oxygen (O₂) inlet stream
- 33: pipe for oxygen-vent/waste-air-fuel stream mixture 37
- 35: outlet of pipe 33
- 37: oxygen-vent/waste-air-fuel stream mixture
- 412: container or vessel
- 420: diptube, in particular inlet diptube
- 424: first inlet, in particular vent inlet or waste inlet
- 426: air inlet
- 428: fuel inlet
- 430: passageway or internal passage of diptube 420
- 432: oxidation zone
- 438: clean gas, in particular clean gas stream
- 440: ullage

## Claims

1. A flameless thermal oxidizer (110; 210; 310; 410), comprising:
- a container (112; 212; 312; 412) in which a ceramic matrix is contained; and
- a diptube (120; 220; 320; 420) having a passageway (130; 230; 330; 430) extending therethrough, the diptube (120; 220; 320; 420) inserted or positioned in the ceramic matrix and in which a plurality of gaseous streams are present for combustion at the ceramic matrix, the plurality of gaseous streams including a vent stream and an oxygen stream.

2. The flameless thermal oxidizer according to claim 1, further comprising:
- a first inlet (124; 224; 324; 424) connected to and in communication with the passageway (130; 230; 330; 430) for introducing the vent stream into the passageway (130; 230; 330; 430), and
- a second inlet (13; 17) connected to and in communication with the passageway (130; 230; 330; 430) for introducing the oxygen stream into the passageway (130; 230; 330; 430).

3. The flameless thermal oxidizer according to claim 2, wherein the first inlet (124) is separate from the second inlet (13).

4. The flameless thermal oxidizer according to claim 2 or 3, wherein the second inlet (17) comprises a pipe sized and shaped to extend into and through a length of the passageway (230).

5. The flameless thermal oxidizer according to claim 4, wherein a distal end of the pipe has an outlet upstream of an opening at a lower end (222) of the diptube (220).

6. The flameless thermal oxidizer according to at least one of claims 1 to 5, further comprising another pipe (23) connected to and in communication with the passageway (330), the another pipe (23) comprising an air stream therein for mixing with the oxygen stream in the another pipe (23) for providing an oxygen-air stream mixture (27) to be provided to the passageway (330).

7. The flameless thermal oxidizer according to at least one of claims 1 to 6, further comprising another pipe (33) connected to and in communication with the passageway (430), the another pipe (33) comprising an air stream, a fuel stream, the vent stream, and the oxygen stream for providing an oxygen-vent-air-fuel stream mixture (37) to be provided to the passageway (430).

8. A method of operating a flameless thermal oxidizer (110; 210; 310; 410), comprising introducing a plurality of gaseous streams into a heated ceramic matrix contained within the flameless thermal oxidizer (110; 210; 310; 410), the plurality of gaseous streams including at least a vent stream and an oxygen stream.

9. The method according to claim 8, wherein the vent stream and the oxygen stream are introduced separately.

10. The method according to claim 8 or 9, further comprising mixing (27) the vent stream and the oxygen stream after the introducing.

11. The method according to at least one of claims 8 to 10, wherein the plurality of gaseous streams further comprises an air stream and a fuel stream.

12. The method according to claim 11, wherein the vent, oxygen, air and the fuel streams are introduced separately.

13. The method according to claim 12, further comprising mixing (37) the separately provided vent, oxygen, air and fuel streams for providing a mixed stream, and introducing the mixed stream into the heated ceramic matrix.

14. The method according to at least one of claims 11 to 13, further comprising mixing the air stream and the oxygen stream for providing an air-oxygen mixture upstream of the vent and fuel streams, and introducing the air-oxygen mixture into the vent and fuel streams.

15. The method according to at least one of claims 8 to 14, further comprising introducing the oxygen stream into the vent stream proximate the ceramic matrix.
